# EUROPEAN PATENT APPLICATION

(11) **EP 2 719 568 A2**
(43) Date of publication of application: **16.04.2014**
(21) Application number: 13186971.1
(22) Date of filing: 01.10.2013
(51) Int. Cl.: B60K 15/04, B60K 15/035

(54) **Fuel tank connection assembly**

(30) Priority: 12.10.2012 US 201213650745
(71) Applicant: TI Automotive Technology Center GmbH, 76437 Rastatt (DE)
(72) Inventor: Boecker, Albert J., 76275 Ettlingen (DE); Dobmaier, Andreas W., 76137 Karlsruhe (DE); Ehler, Alex, 76437 Rastatt (DE); Gmünd, Patrick, 76149 Karlsruhe (DE); Grauer, Peter, 76872 Steinweiler (DE); Michaelis, Gerrit, 77948 Friesenheim (DE); Olbrich, Matthias B., 76437 Rastatt (DE)
(74) Representative: Wolf, Eckhard

(57) **Abstract**

A fuel tank connection assembly (10) may include a first connector (16) and a second connector (18) that are brought together with a fuel tank neck tubing (20). The first connector (16) may have one or more self-tapping thread(s) (34) located at an interior surface (32) of the first connector, and may also have a set of first screw threads (36) located at the interior surface (32). The second connector (18) may have a set of second screw threads (50) located at an exterior surface (44) of the second connector. When the first and second connectors (16, 18) are brought together with the fuel tank neck tubing (20), the self-tapping thread(s) (34) can be threaded over an exterior surface (68) of the fuel tank neck tubing (20) and the first and second screw threads (36, 50) can be mated together.

## Description

The present disclosure relates generally to vehicle fuel tanks, and more particularly to connection assemblies used in vehicle fuel tanks.
Vehicle fuel systems provide liquid fuel to a prime mover such as an automotive internal combustion engine. The fuel systems often include a fuel tank to hold fuel, fuel lines connected to the fuel tank for incoming and outgoing fuel, vapor lines connected to the fuel tank and to a downstream charcoal canister, and possibly other lines connected to the fuel tank. The connections between the fuel tank and lines require connection components and sometimes include a welding operation in which the connection components are welded to the fuel tank, to the lines, to each other, or a combination of these. The connections sometimes also include a clamping component that is clamped around another component. While these connections are mostly effective, the welding operation and clamping component can add cost and complexity to the fuel tanks and lines.

A fuel tank connection assembly may include a first connector and a second connector. The first connector may have one or more threads located at a first section of an interior surface, and may have one or more first screw threads located at a second section of the interior surface. The second connector may have one or more second screw threads located at an exterior surface. When the first and second connectors are brought together with a fuel tank neck tubing, the one or more threads can be threaded over an exterior surface of the fuel tank neck tubing in order to secure the first connector and the fuel tank neck tubing together. Further, the one or more first and second screw threads can be mated together in order to secure the first and second connectors together.

A fuel tank connection assembly may include a first connector, a second connector, and a fuel tank neck tubing. The first connector may have one or more self-tapping threads located at a first section of an interior surface, and may have one or more first screw threads located at a second section of the interior surface. The second connector may have one or more second screw threads located at an exterior surface. The fuel tank neck tubing may extend from a fuel tank and may communicate with an interior of the fuel tank. When the first connector, the second connector, and the fuel tank neck tubing are brought together, the one or more self-tapping threads can be threaded over an exterior surface of the fuel tank neck tubing in order to secure the first connector and the fuel tank neck tubing together. The one or more first screw threads and the one or more second screw threads can be mated together in order to secure the first and second connectors together.

A fuel tank connection assembly may include a first connector, a tube fitting, and a fuel tank neck tubing. The first connector may have one or more self-tapping threads located at a first section of an interior surface, and may have one or more first screw threads located at a second section of the interior surface. The first connector may have a first free end and a second free end, and may have a first axial extent taken between the first and second free ends. The first connector may have an axially-facing first side surface at the second free end. The tube fitting may have one or more second screw threads located at an exterior surface. The tube fitting may have a third free end and a fourth free end, and may have a first flow passage extending between the third and fourth free ends. The tube fitting may have an axially-facing second side surface located axially between the third and fourth free ends. The fuel tank neck tubing may extend from a fuel tank and may communicate with the fuel tank. The fuel tank neck tubing may have a fifth free end, and may have a second flow passage extending from the fuel tank to the fifth free end. When the first connector, the tube fitting, and the fuel tank neck tubing are brought together, i) the one or more self-tapping threads can be threaded over an exterior surface of the fuel tank neck tubing in order to secure the first connector and the fuel tank neck tubing together; ii) the one or more first screw threads and the one or more second screw threads can be mated together in order to secure the first connector and the tube fitting together; iii) the first side surface and the second side surface may make contact with each other; iv) the first flow passage and the second flow passage may communicate with each other; v) a first seal may be provided at a surface-to-surface interface between an exterior surface of the tube fitting and an interior surface of the fuel tank neck tubing; vi) a second seal may be provided at an interface of the mated one or more first and second screw threads; vii) a third seal may be provided at an interface of the threaded one or more self-tapping threads and exterior surface of the fuel tank neck tubing; viii) a fourth seal may be provided at a surface-to-surface interface between the first side surface and the second side surface; ix) the fourth free end of the tube fitting may be inserted through the fifth free end of the fuel tank neck tubing into the second flow passage to define a second axial extent between the fourth free end and the fifth free end of the overlapping tube fitting and fuel tank neck tubing; x) the first axial extent may be greater in axial length than the second axial extent; and xi) the first axial extent may axially overlap the second axial extent.

The following detailed description of preferred embodiments and best mode will be set forth with reference to the accompanying drawings, in which:

FIG. 1 is a perspective view of an embodiment of a fuel tank connection assembly, showing part of a fuel tank;

FIG. 2 is a perspective view of the fuel tank connection assembly of FIG. 1;

FIG. 3 is a cross-sectional view of the fuel tank connection assembly of FIG. 1 taken at arrowed line 3-3 in FIG. 2;

FIG. 4 is a perspective view of an embodiment of a first connector that can be used with the fuel tank connection assembly of FIG. 1;

FIG. 5 is a cross-sectional view of the first connector of FIG. 4;

FIG. 6 is a perspective view of an embodiment of a second connector that can be used with the fuel tank connection assembly of FIG. 1;

FIG. 7 is a cross-sectional view of the second connector of FIG. 6;

FIG. 8 is an enlarged view of a fuel tank connection assembly similar to that of FIG. 1, this view showing optional o-ring gasket locations; and

FIG. 9 is a cross-sectional view of another embodiment of a fuel tank connection assembly.

Referring in more detail to the drawings, a vehicle fuel tank connection assembly 10 can be used in a vehicle fuel system, such as an automotive fuel system with a gasoline or diesel engine, in order to serve as a coupling between a fuel tank 12 and a line 14 such as a fuel or vapor line. Liquid fuel, gas fuel, vapor, or a combination of these can then be exchanged between the fuel tank 12 and the line 14. As will be described in greater detail below, the vehicle fuel tank connection assembly 10 provides an effective sealed coupling between the fuel tank 12 and the line 14. The connection assembly 10 can cost less and have less complexity than the previously-known connections while still effectively sealing against leakage. As an aside, the terms axial, radial, and circumferential as used herein refer to directions relative to the generally cylindrical bodies of components of the connection assembly, such that axially refers to a direction along an axis of the cylindrical bodies, radially refers to a direction along a radius of the cylindrical bodies, and circumferentially refers to a direction along a circumference of the cylindrical bodies.

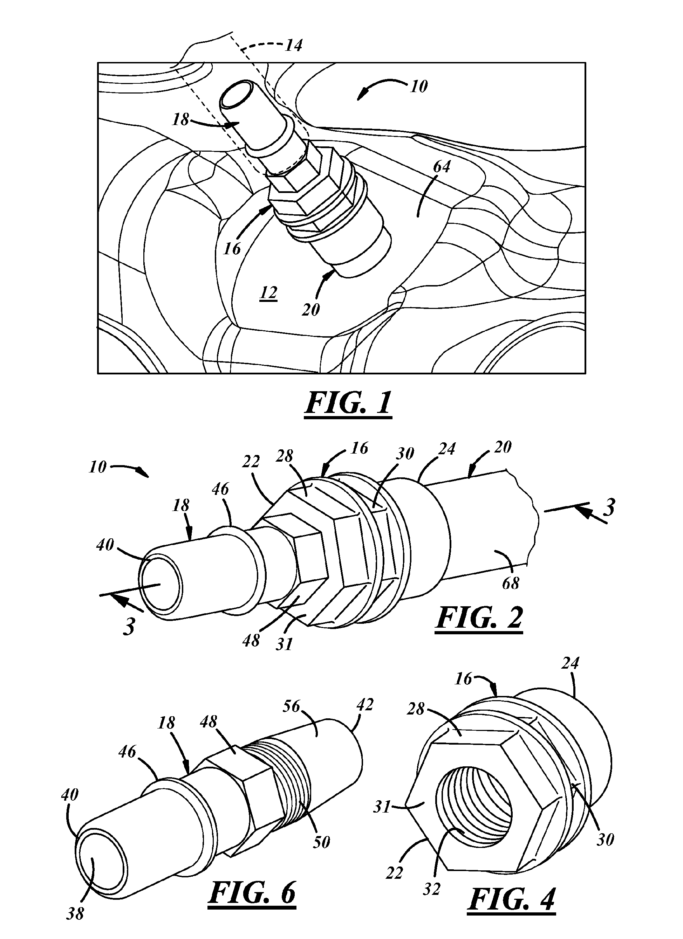

The vehicle fuel tank connection assembly 10 can have different designs, constructions, and components depending upon, among other considerations, the design and construction of the fuel tank 12 and of the line 14. Referring to FIGS. 1-3, in a first embodiment the connection assembly 10 is a multi-piece assembly and includes a first connector 16, a second connector 18, and a fuel tank neck tubing 20 that are all brought together in installation to the fuel tank 12.

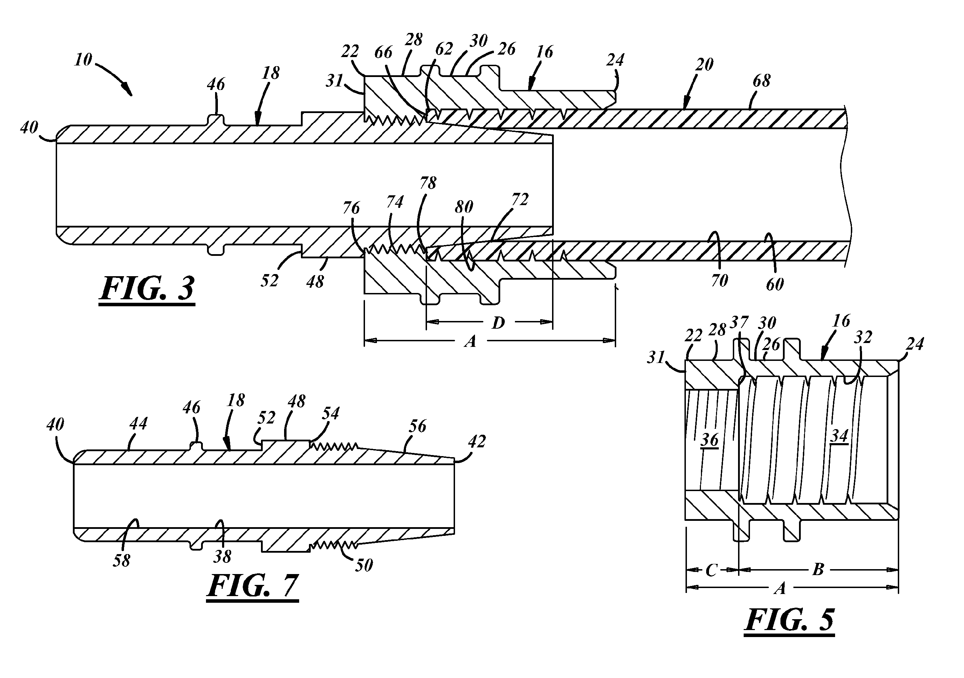

The first connector 16 provides a sealed coupling with the second connector 18 and with the fuel tank neck tubing 20. The first connector 16 can have different designs and constructions depending upon, among other considerations, the design and construction of the second connector 18 and of the fuel tank neck tubing 20. Referring now to FIGS. 4 and 5, in this embodiment the first connector 16 is the most radially-outwardly component of the connection assembly 10 when in the assembled and installed state, and resembles and functions like a nut in some respects. The first connector 16 has a generally shortened cylindrical shape compared to the second connector 18 and the fuel tank neck tubing 20, and can be composed of a metal or a plastic material such as a high-density polyethylene (HDPE) plastic partially filled with fiber glass, or both. Its cylindrical shape defines an axial extent A spanning between a first free end 22 and a second free end 24. At an exterior surface 26, the first connector 16 has a first and second noncircular (shown as hexagonal) portion 28, 30 for accepting engagement by a tool and fastening the connector in place. The first connector 16 also has an axially-facing first side surface 31 at the first free end 22.

As best shown in FIG. 5, at an interior surface 32 the first connector 16 has a set of threads 34, such as self-tapping threads, located over a first axial section B of the interior surface, and has a set of first screw threads 36 located over a second axial section C of the interior surface. For both of the threads 34, 36, there can be a single thread and need not necessarily be a set in some embodiments. The self-tapping threads 34, if provided in this form, can be in the more specific form of self-cutting threads or self-forming threads depending upon the material used for the fuel tank neck tubing 20 and the first connector 16, as will be appreciated by skilled artisans. The first screw threads 36 are constructed for twisting and mating with a complementary set of threads of the second connector, described below. In one specific example, the first screw threads 36 are sized M20 (i.e., 20 mm diameter); of course, other sizes are possible in other examples. The first axial section B may be located immediately axially next to the second axial section C such that the interior surface 32 transitions between the first and second axial sections without a non-threaded axial section therebetween, if desired. A radially inwardly extending and annular shoulder 37 may be located at the stepped transition. Indeed, in this embodiment the entire interior surface 32 is covered by the self-tapping threads 34 and the first screw threads 36, and thus adding the axial lengths of the first and second axial sections B, C together equals the axial length of the first axial extent A. Furthermore, in this embodiment the axial length of the first axial section B is greater than the axial length of the second axial section C, and the first axial section has a uniform first diameter that is greater than a uniform second diameter of the second axial section.

As best shown in FIG. 3, the second connector 18 provides a sealed coupling with the first connector 16 and with the fuel tank neck tubing 20, and provides a direct coupling to the line 14 (FIG. 1). The second connector 18 can have different designs and constructions depending upon, among other considerations, the design and construction of the first connector 16 and of the fuel tank neck tubing 20. Referring to FIGS. 6 and 7, in this embodiment the second connector 18 is the most radially-inwardly component of the connection assembly 10 when in the assembled and installed state, and is in the form of a tube fitting. The tube fitting 18 has a generally elongated cylindrical shape compared to the first connector 16, and can be composed of a metal or a plastic material such as an HDPE plastic partially filled with fiber glass, or both. Its cylindrical shape defines a flow passage 38 extending between a first free end 40 and a second free end 42.

At an exterior surface 44, the tube fitting 18 can have one or more ribs 46 protruding radially-outwardly therefrom for facilitating a secure coupling with the line 14; other couplings to the line are possible including what-is-commonly-known as a fir tree profile connection. The tube fitting 18 also has a noncircular (shown as hexagonal) portion 48 and a set of second screw threads 50 at its exterior surface 44. As before, the noncircular portion 48 can accept engagement by a tool for fastening the tube fitting 18 in place. The noncircular portion 48 is located about axially midway on the body of the tube fitting 18, axially interposed between the rib 46 and the second screw threads 50 and spaced from the second end 42. An axially-facing first side surface 52 of the noncircular portion 48 is directed away from the first connector 16 in the assembled and installed state (FIG. 3), and an axially-facing second side surface 54 is directed toward the first connector in the assembled and installed state. The second screw threads 50 are constructed for mating with the first screw threads 36 of the first connector 16, and in some embodiments there can be a single thread and need not necessarily be a set of them. In this embodiment, the second screw threads 50 are located immediately axially next to the noncircular portion 48 and are spaced a distance axially away from the second free end 42, with a non-threaded section 56 extending between the second screw threads and the second free end. The non-threaded section 56 is tapered radially-inwardly such that it has a decreasing outer diameter toward the second free end 42. An interior surface 58 of the tube fitting 18 and the flow passage 38 may have a uniform diameter throughout their axial extents, if desired.

The fuel tank neck tubing 20 provides a sealed coupling with the first connector 16 and the tube fitting 18, and directly communicates with an interior of the fuel tank 12. The fuel tank neck tubing 20 can have different designs and constructions depending upon, among other considerations, the design and construction of the first connector 16 and of the tube fitting 18. Referring to FIGS. 1-3, in this embodiment the fuel tank neck tubing 20 is sandwiched radially between the first connector 16 and the tube fitting 18 when in the assembled and installed state. The fuel tank neck tubing 20 may be an integral and unitary extension of the fuel tank 12, may extend directly from the fuel tank, and can be made as part of the formation process of the fuel tank such as during a blow molding process. The fuel tank neck tubing 20 has a generally elongated cylindrical shape compared to the first connector 16, and can be composed of the same material as the fuel tank 12 such as one or more plastic materials. Its cylindrical shape defines a flow passage 60 extending between a free end 62 of the fuel tank neck tubing 20 and a wall 64 of the fuel tank 12. The flow passage 60 therefore directly communicates with an interior of the fuel tank 12. An axially-facing side surface 66 is located at the free end 62. Before assembly and installation, an exterior surface 68 of the fuel tank neck tubing 20 may be smooth with a uniform diameter throughout its axial extent and without any surface features compared to the first connector 16 and the tube fitting 18. Similarly, an interior surface 70 may be smooth with a uniform diameter throughout its axial extent and without any surface features.

Still referring to FIGS. 1-3, to assemble and install the vehicle fuel tank connection assembly 10, the self-tapping threads 34 of the first connector 16 are drivingly threaded over the exterior surface 68 of the fuel tank neck tubing 20. The self-tapping threads 34 are physically dug into the body of the fuel tank neck tubing 20 and anchor the first connector 16 to the fuel tank neck tubing and secure and seal the two components together. The first connector 16 can be threaded over the fuel tank neck tubing 20 until the shoulder 37 of the first connector abuttingly engages and comes into contact with the side surface 66 of the fuel tank neck tubing. Though not shown here, the first connector 16 could completely cover and extend over the entire axial extent of the fuel tank neck tubing 20 such that no portion of the exterior surface 68 would be visible in FIG. 1. The tube fitting 18 can then be inserted through the first connector 16 into the flow passage 60 of the fuel tank neck tubing 20. The first screw threads 36 of the first connector 16 are mated with the second screw threads 50 of the tube fitting 18, and the screw threads are tightened down on each other to secure the first connector and the tube fitting together. The tube fitting 18 can be mated into the first connector 16 until the second side surface 54 of the tube fitting abuttingly engages and comes into contact with the first side surface 31 of the first connector. When mating, the axial end portion near the free end 62 rides over the non-threaded section 56 and is compressed between the tube fitting 18 and the first connector 16.

When fully assembled and installed, the axial extent A of the first connector 16 axially overlaps and radially surrounds the second free end 42 of the tube fitting 18 and the free end 62 of the fuel tank neck tubing 20. The tube fitting 18 is inserted into the fuel tank neck tubing 20 and defines an overlapped axial extent D between the respective end portions of the tube fitting and the fuel tank neck tubing. The axial extent D is itself axially overlapped by the axial extent A, and as such the axial extent A has an axial length that is greater in value than an axial length of the axial extent D. This relationship, if it exists in a particular embodiment, contributes to the effective sealing performance of the vehicle fuel tank connection assembly 10 and facilitates the provision of an interface sealing path among the components of the connection assembly and the multiple seals formed along the interface sealing path.

The interface sealing path is formed by surface-to-surface confronting contact among the first connector 16, the tube fitting 18, and the fuel tank neck tubing 20. For the purposes of description, beginning at the flow passage 60 of the fuel tank neck tubing 20, a first seal 72 can be produced at a surface-to-surface interface between the exterior surface 44 of the tube fitting 18 and an interior surface 70 of the fuel tank neck tubing. Continuing along the interface sealing path, a second seal 74 can be produced at an interface between the mated first and second screw threads 36, 50. Further, a third seal 76 can be produced at a surface-to-surface interface between the first side surface 31 of the first connector 16 and the second side surface 54 of the tube fitting 18. A fourth seal 78 can be produced at a surface-to-surface interface between the shoulder 37 of the first connector 16 and the side surface 66 of the fuel tank neck tubing 20. Lastly, a fifth seal 80 can be produced at an interface between the threaded self-tapping threads 34 and the exterior surface 68 of the neck tubing 20. Furthermore, not all of the individual seals need be provided in all embodiments; indeed, in one embodiment only the first seal 72 need be produced to provide an effective seal against leakage. All of the seals-if produced in a particular embodiment, and alone or in combination with one another-can altogether, or at least help, prevent escape of liquid fuel, gas fuel, and vapor from the flow passage 60 and from the flow passage 38 to the surrounding environment outside of the first connector 16.

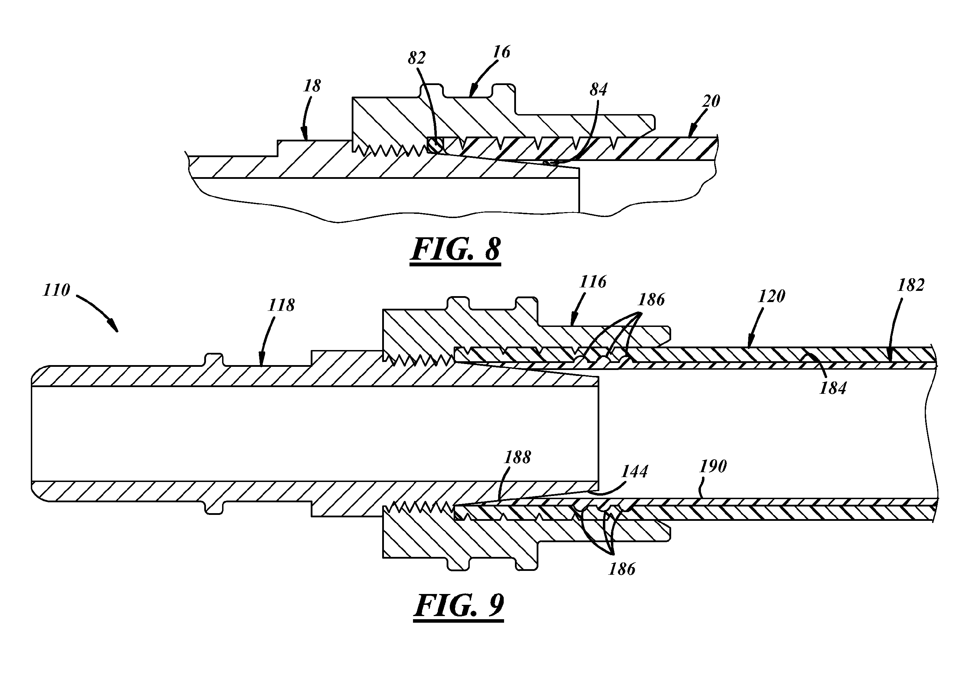

The numerous seals are effectively provided without the use of welding operations, clamping components, or both, which are sometimes included in previously-known connections. Though one or more welds among the components of the connection assembly 10 are possible in some embodiments, in at least one embodiment welds among the components can be eliminated while still securing the components together via threading, for example, and providing sealing via the surface-to-surface confronting contact. Similarly, though one or more sealing members (e.g., o-ring gaskets) among the components of the connection assembly 10 are possible in some embodiments,-such as an o-ring gasket 82 sandwiched between free end 62 and axially-facing side surface 66 and an o-ring gasket 84 sandwiched between the non-threaded section 56 and the interior surface 70, or both, as shown in FIG. 8-in at least one embodiment sealing members need not be provided in the connection assembly while still producing seals via the surface-to-surface confronting contact.

Figure 9 shows a second embodiment of a vehicle fuel tank connection assembly 110. This embodiment is similar in some ways to the embodiment of FIGS. 1-7, and the similarities may not necessarily be repeated here; for example, a first connector 116, a second connector 118, and a fuel tank neck tubing 120 may all be the same as previously described.

One difference in the second embodiment is a fuel tank vent tubing 182. The fuel tank vent tubing 182 leads to, and communicates with, a venting system component equipped in the accompanying fuel tank. The fuel tank vent tubing 182 can have different designs and constructions depending upon, among other considerations, the design and construction of the venting system and of the fuel tank neck tubing 120. In this embodiment, the fuel tank vent tubing 182 is located radially-inwardly of the fuel tank neck tubing 120, and has an exterior surface 184 that makes surface-to-surface confrontation and abutment with the interior surface 70 of the fuel tank neck tubing. The fuel tank vent tubing 182 can be composed of a metal or a plastic material such as an HDPE or polyamide (PA) material. Like the fuel tank neck tubing 120, the fuel tank vent tubing 182 has a generally elongated cylindrical shape. The fuel tank vent tubing 182 can be placed concentrically inside of the fuel tank neck tubing 120 during the blow molding process of the fuel tank while the neck tubing is still partially molten, and can be secured in-place therein once the material of the fuel tank neck tubing cools and solidifies around it. To assist securement, the fuel tank vent tubing 182 can have several ribs 186 projecting radially-outwardly from the exterior surface 184. The ribs 186 can bond with the material of the fuel tank neck tubing 120 during the blow molding process. The securement between the fuel tank neck tubing 120 and the fuel tank vent tubing 182 might only be temporary, with more permanent securement provided with the assembly and installation of the first and second connectors 116, 118. When assembled and in use, a seal 188 can be produced at a surface-to-surface interface between an interior surface 190 of the fuel tank vent tubing 182 and an exterior surface 144 of the second connector 118.

Furthermore, the vehicle fuel tank connection assembly 10 can have different designs, constructions, and components apart from what is shown in the figures. For example, the location and placement of the first connector 16 and the tube fitting 18 could be swapped in which case the first connector is the most radially-inwardly component and the tube fitting is the most radially-outwardly component; the overlapped axial extent of the tube fitting and fuel tank neck tubing need not necessarily be less than the axial extent of the first connector; and the various side surfaces need not necessarily abuttingly engage when the components are fully assembled and installed.

## Claims

1. A fuel tank connection assembly, comprising:
a first connector having at least one thread at a first section of an interior surface of said first connector, said first connector further having at least one first screw thread at a second section of said interior surface; and
a second connector having at least one second screw thread at an exterior surface of said second connector;
wherein, when said first and second connectors are brought together with a fuel tank neck tubing, said at least one thread of said first connector is threaded over an exterior surface of the fuel tank neck tubing in order to secure said first connector and the fuel tank neck tubing together, and said at least one first screw thread and said at least one second screw thread are mated together in order to secure said first connector and said second connector together.

2. The fuel tank connection assembly of claim 1, wherein said at least one thread is at least one self-tapping thread and said self-tapping thread is a self-cutting thread constructed to dig into an exterior surface of the fuel tank neck tubing.

3. The fuel tank connection assembly of claim 1, wherein said first connector, said second connector, and the fuel tank neck tubing are free of a weld at any interface of said first connector, said second connector, and the fuel tank neck tubing.

4. The fuel tank connection assembly of claim 1, wherein said second connector is a tube fitting with a flow passage extending from a first free end to a second free end of said tube fitting, and, when said first connector and said tube fitting are brought together with the fuel tank neck tubing, said first free end is inserted through a free end of the fuel tank neck tubing and into an interior of the fuel tank neck tubing.

5. The fuel tank connection assembly of claim 4, wherein said first connector has an axial extent between a first free end and a second free end of said first connector that, when said first connector and said tube fitting are brought together with the fuel tank neck tubing, axially overlaps said first free end of said tube fitting and said free end of the fuel tank neck tubing.

6. The fuel tank connection assembly of claim 1, further comprising the fuel tank neck tubing, said fuel tank neck tubing extending directly from a fuel tank and communicating with an interior of the fuel tank.

7. A fuel tank connection assembly, comprising:
a first connector having at least one self-tapping thread at a first section of an interior surface of said first connector, said first connector further having at least one first screw thread at a second section of said interior surface;
a second connector having at least one second screw thread at an exterior surface of said second connector; and
a fuel tank neck tubing extending from a fuel tank and communicating with an interior of the fuel tank;
wherein, when said first connector, said second connector, and said fuel tank neck tubing are brought together, said at least one self-tapping thread of said first connector is threaded over an exterior surface of said fuel tank neck tubing in order to secure said first connector and said fuel tank neck tubing together, and said at least one first screw thread and said at least one second screw thread are mated together in order to secure said first connector and said second connector together.

8. The fuel tank connection assembly of claim 7, wherein a first seal is provided at a surface-to-surface interface between said exterior surface of said second connector and an interior surface of said fuel tank neck tubing.

9. The fuel tank connection assembly of claim 8, wherein, when said first connector, said second connector, and said fuel tank neck tubing are brought together, a second seal is provided at an interface of the mated at least one first and second screw threads and a third seal is provided at an interface of said at least one self-tapping thread and said exterior surface of said fuel tank neck tubing.

10. The fuel tank connection assembly of claim 9, wherein said first seal, said second seal, and said third seal are free of a sealing member that is a separate and distinct component from said first connector, said second connector, and said fuel tank neck tubing.

11. The fuel tank connection assembly of claim 7, wherein said second connector has a first free end and said fuel tank neck tubing has a second free end, said first connector has a first axial extent between a first free end and a second free end of said first connector, and, when said first connector, said second connector, and said fuel tank neck tubing are brought together, said first free end of said second connector is inserted through said second free end of said fuel tank neck tubing into an interior of said fuel tank neck tubing to define a second axial extent between said first free end of said second connector and said second free end of said fuel tank neck tubing of the overlapping second connector and fuel tank neck tubing, wherein said first axial extent is greater in axial length than said second axial extent and said first axial extent axially overlaps said second axial extent.

12. The fuel tank connection assembly of claim 9, wherein an interface path among said first connector, said second connector, and said fuel tank neck tubing from an interior of said fuel tank neck tubing to an exterior of the fuel tank connection assembly begins at said first seal, spans to said second seal immediately following said first seal in a first direction, and spans to said third seal immediately following said second seal in a second direction that is different than the first direction.

13. The fuel tank connection assembly of claim 7, wherein said first connector has an axially-facing first side surface and said second connector has an axially-facing second side surface, and a fourth seal is provided at a surface-to-surface interface between said first side surface and said second side surface.

14. The fuel tank connection assembly of claim 13, wherein said first connector has a shoulder located at said interior surface of said first connector, said fuel tank neck tubing has an axially-facing third side surface located at a free end of said fuel tank neck tubing, and a fifth seal is provided at a surface-to-surface interface between said shoulder and said third side surface.

15. The fuel tank connection assembly of claim 7, further comprising a fuel tank vent tubing located interiorly of said fuel tank neck tubing, said fuel tank vent tubing having an exterior surface making general surface-to-surface confrontation with an interior surface of said fuel tank neck tubing, and wherein, when said first connector, said second connector, said fuel tank neck tubing, and said fuel tank vent tubing are brought together, a first seal is provided at a surface-to-surface interface between said exterior surface of said second connector and an interior surface of said fuel tank vent tubing.
